# FASCICULE DE BREVET EUROPEEN

(11) **EP 2 875 679 B1**
(45) Date de publication et mention de la délivrance du brevet: **10.01.2018**
(21) Numéro de dépôt: 13744610.0
(22) Date de dépôt: 21.06.2013
(51) Int. Cl.: H04W 48/18, H04W 4/24, H04W 8/02

(54) **GESTION DE LA MOBILITÉ DANS UN RÉSEAU DE COMMUNICATION EN FONCTION D'UN PROFIL D'UTILISATION DE CRÉDITS**
MOBILITÄTSMANAGEMENT IN EINEM KOMMUNIKATIONSNETZ BASIS PROFIL DER VERWENDUNG VON CREDIT
MOBILITY MANAGEMENT IN A COMMUNICATION NETWORK BASED PROFILE OF USE OF CREDIT

(30) Priorité: 20.07.2012 FR 1257055
(43) Date de publication de la demande: 27.05.2015
(73) Titulaire: Orange, 75015 Paris (FR)
(72) Inventeur: EL MOUMOUHI, Sanaa, F-92120 Montrouge (FR); RADIER, Benoît, F-22700 Perros Guirec (FR)
(74) Mandataire: Regimbeau
(86) Numéro de dépôt international: PCT/FR2013/051461
(87) Numéro de publication internationale: WO 2014/013156

(56) Documents cités:
- WO-A1-2011/050835
- WO-A1-2011/147465
- MARIUS CORICI ET AL: "Enhanced access network discovery and selection in 3GPP Evolved Packet Core", LOCAL COMPUTER NETWORKS, 2009. LCN 2009. IEEE 34TH CONFERENCE ON, IEEE, PISCATAWAY, NJ, USA, 20 octobre 2009 (2009-10-20), pages 677-682, XP031581399, ISBN: 978-1-4244-4488-5

## Description

### DOMAINE TECHNIQUE GENERAL

L'invention concerne le domaine des communications cellulaires, et plus particulièrement la gestion de la mobilité entre des réseaux d'accès 3GPP et non 3GPP telle que spécifiée par le standard 3GPP, en particulier dans les spécifications techniques TS 24.302 et TS 24.312.

### ETAT DE LA TECHNIQUE

Lorsqu'un utilisateur d'un terminal de communication mobile est abonné à un opérateur de télécommunication, cet opérateur de télécommunication permet à l'utilisateur de se connecter à un réseau de communication par l'intermédiaire de son terminal mobile, moyennant la souscription d'un abonnement afin d'accéder à plusieurs types de services provenant d'un réseau IP (en anglais, « *Internet Protocol* »), tel que le réseau Internet.

Lorsque ce réseau est un réseau cellulaire 3GPP (par exemple, Edge, 3G, 3G+, 4G, LTE) il comporte un coeur de réseau, ainsi qu'un réseau d'accès 3GPP comportant un ensemble de points d'accès 3GPP (NodeB pour la 3G) auprès desquels le terminal se connecte.

Outre le réseau d'accès 3GPP, l'opérateur peut mettre à disposition de ses abonnées des points d'accès non 3GPP (désignés par le terme « *hot spot* ») pour augmenter la couverture et la capacité du réseau d'accès 3GPP.

Le terminal de communication peut ainsi effectuer une mobilité d'un réseau d'accès 3GPP vers un réseau non 3GPP, et vice versa.

Dans le standard 3GPP, notamment dans les spécifications TS 24.302 et TS 24.312, il est prévu un serveur de découverte de points d'accès (en anglais, « *Access Network Discovery and Selection Function* », (ANDSF)). En particulier, ce serveur ANDSF fournit, sur requête d'un terminal mobile en cours de mobilité, une liste de points d'accès à proximité de la position du terminal mobile. Les points d'accès sont relatifs à des réseaux d'accès non 3GPP (par exemple Wi-Fi, Wimax) et/ou 3GPP (par exemple Edge, 3G, 3G+, 4G, LTE). Un exemple se trouve dans WO 2011/147465. En outre, ce serveur ANDSF comporte une base de données comprenant des informations sur la topologie de réseaux d'accès et des informations sur des règles de sélection d'un réseau d'accès, notamment des règles d'un opérateur de télécommunication, ce qui permet d'ordonner la liste des types d'accès et des points accès que le terminal peut utiliser de préférence.

Pour recevoir la liste, le terminal transmet une requête au serveur ANDSF pour que, en cas de changement de position du terminal mobile ou en cas de dégradation de la qualité de la liaison radio, le terminal puisse récupérer la liste des points d'accès disponibles à proximité du terminal mobile.

Ainsi le terminal mobile stocke dans une mémoire une liste de points d'accès auxquels il peut se connecter, préparée par le serveur ANDSF, puis décide d'effectuer une mobilité vers un réseau d'accès de la liste, si nécessaire, en utilisant cette liste de points d'accès.

Cette liste de points d'accès se présente sous la forme d'une liste ordonnée de points d'accès à proximité du terminal mobile, éventuellement classée par types de réseau d'accès (3G, 4G, Wifi, Wimax).

La gestion de la mobilité actuellement déployée par le serveur ANDSF ne se fonde que sur des critères de connectivité, impliquant éventuellement des règles pour que l'accès à un service passe par un certain type d'accès afin de permettre au terminal d'obtenir le service avec une meilleure qualité de service (en anglais, « *Quality Of Service* », (QoS)).

Il existe toutefois un besoin de prendre en compte, dans la gestion de la mobilité, un profil de l'utilisateur du terminal mobile par rapport à ses besoins en termes de services souscrit auprès d'un opérateur de télécommunication, et notamment des crédits dont l'utilisateur dispose pour utiliser différents réseaux d'accès.

### PRESENTATION DE L'INVENTION

L'invention permet de répondre à ce besoin et propose, selon un premier aspect, un procédé de gestion de la mobilité d'un terminal mobile dans un réseau de communication comprenant une pluralité de points d'accès et un serveur de découverte de points d'accès adapté pour fournir au terminal mobile une liste de points d'accès du réseau auxquels le terminal mobile peut se connecter, le procédé comprenant les étapes suivantes, mises en oeuvre par le serveur de découverte de points d'accès :
récupération, auprès d'un serveur de gestion de crédits, d'un profil d'utilisation de crédits associé au terminal mobile ;
génération de la liste de points d'accès en fonction dudit profil d'utilisation de crédits.

Le procédé de l'invention est avantageusement complétée par les caractéristiques suivantes, prises seules ou en une quelconque de leur combinaison techniquement possible :
- la récupération du profil d'utilisation de crédits comprend l'envoi d'une requête auprès du serveur de gestion de crédits et la réception d'au moins un message comprenant le profil d'utilisation de crédits, émis par le serveur de gestion de crédits suite à la réception de ladite requête ;
- la requête est une requête en souscription de mise à jour des crédits et le message comprenant le profil d'utilisation de crédits est émis par le serveur de gestion de crédits suite à une modification du profil d'utilisation de crédits associé au terminal mobile ;
- la modification du profil d'utilisation de crédits comprend l'épuisement d'au moins un crédit alloué à l'utilisateur du terminal mobile dans le profil d'utilisation de crédits ou le rechargement d'au moins un crédit épuisé alloué à l'utilisateur du terminal mobile dans le profil d'utilisation de crédits ;
- le procédé comprend en outre l'envoi de la liste de points d'accès au terminal mobile, ledit terminal mobile sélectionnant un nouveau point d'accès auquel s'attacher en situation de mobilité au moyen de ladite liste ;
- le terminal mobile est attaché initialement à un réseau d'accès 3GPP et où la liste comprend des points d'accès appartenant à un réseau non 3GPP.

Selon un second aspect, l'invention concerne un serveur de découverte de points d'accès apte à transmettre à un terminal mobile une liste de points d'accès auxquels le terminal mobile peut se connecter, parmi une pluralité de points d'accès d'un réseau de communication, le serveur de découverte de points d'accès étant configuré pour : récupérer, auprès d'un serveur de gestion de crédits, un profil d'utilisation de crédits associé au terminal mobile ; et générer la liste de points d'accès en fonction dudit profil d'utilisation de crédits.

Selon un troisième aspect, l'invention concerne un serveur de gestion de crédits comprenant une base de données dans laquelle est stockée le profil d'utilisation de crédits de l'utilisateur d'un terminal mobile, le serveur de gestion de crédits étant configuré pour transmettre à un serveur de découverte de points d'accès ledit profil d'utilisation de crédits suite à la réception d'une requête émise par ledit serveur de découverte de points d'accès . De manière avantageuse, la requête émise par le serveur de découverte de points d'accès est une requête en souscription de mise à jour des crédits, le serveur étant configuré pour transmettre le profil d'utilisation de crédits au serveur de découverte de points d'accès suite à une mise à jour du profil d'utilisation de crédits.

Selon un quatrième aspect, l'invention concerne un terminal mobile comprenant un module de sélection d'un point d'accès d'un réseau de communication, ce module de sélection étant configuré pour sélectionner le point d'accès dans une liste de points d'accès reçue d'un serveur de découverte de points d'accès du réseau de communication, cette liste de points d'accès étant générée en fonction d'un profil d'utilisation de crédits récupéré par le serveur de découverte de points d'accès auprès d'un serveur de gestion de crédits.

Selon un cinquième aspect, l'invention concerne un système de gestion de mobilité d'un terminal mobile comprenant un serveur de gestion de crédits selon le troisième aspect de l'invention et un serveur de découverte de points d'accès selon le second aspect de l'invention.

Selon un sixième aspect, l'invention concerne un produit programme d'ordinateur comprenant des instructions de code pour l'exécution d'un procédé selon le premier aspect de l'invention, lorsque celui-ci est exécuté par un processeur.

En se fondant sur le profil d'utilisation de crédits par rapport aux services souscrits la mobilité d'un terminal mobile de communication est optimisée pour maximiser la qualité d'expérience des utilisateurs.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre schématiquement un réseau de communication d'un opérateur ;
- la figure 2 illustre schématiquement le déploiement de points d'accès d'un réseau de communication d'un opérateur ; et
- la figure 3 illustre un procédé de gestion de la mobilité d'un terminal mobile, dans un réseau de communication, conforme à un mode de réalisation de l'invention.

### DESCRIPTION DETAILLEE DE L'INVENTION

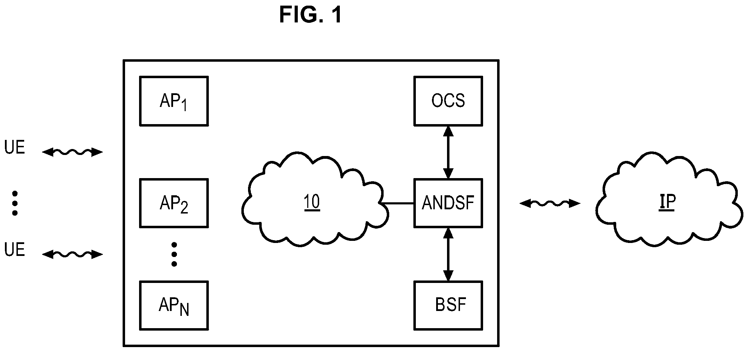

En relation avec la **figure 1**, un réseau de communication conforme à l'invention est illustré.

Le réseau comprend plusieurs points d'accès APi permettant d'accéder à des réseaux d'accès 10 et au moins un terminal mobile UE. Un réseau d'accès permet au terminal mobile UE de se connecter à un réseau IP (en anglais, « Internet Protocol ») du type Internet pour accéder à des services.

Un point d'accès APi (i=1, 2, 3) définit une zone de couverture Zi (i=1, 2, 3) dans laquelle est localisé le terminal mobile UE par rapport à un point d'accès. Ces points d'accès sont soit des points d'accès 3GPP, soit des points d'accès non 3GPP. Dans le cas d'un réseau d'accès 4G, les points d'accès sont des équipements appelés « eNodeB ». Dans le cas d'un réseau d'accès 3G, les points d'accès sont des « NodeB ». Dans le cas d'un réseau d'accès 2G ou GPRS, les points d'accès sont des BTS (en anglais, « *Base Transceiver Station* »). Dans le cas d'un réseau d'accès WiFi, les points d'accès sont des « *hotspots* »*.* Enfin, dans le cas d'un réseau d'accès WIMAX, les points d'accès sont des stations de base.

Le réseau comprend un serveur de découverte de points d'accès, désigné par ANDSF, qui permet de gérer une liste de points d'accès, un serveur de gestion de crédits (en anglais, « *Online Charging System* ») et un serveur d'authentification mutuel (en anglais, « *Bootstrap Serving Function* », (BSF)).

Le serveur de découverte de point d'accès ANDSF peut être implémenté sous la forme d'un serveur dédié à cette seule fonctionnalité de découverte de points d'accès ou sous la forme d'un module logiciel installé dans un serveur ayant d'autres fonctions dans le réseau, notamment un serveur PCRF en charge d'appliquer certaines politiques de réseau et des règles de facturation.

Les terminologies ANDSF, OCS et BSF sont reprises des standards 3GPP et sont utilisées par la suite, sans que l'invention ne se limite aux seules entités ainsi nommées dans ces standards, l'invention pouvant s'appliquer à tout réseau présentant des entités physiques ayant les mêmes fonctionnalités que ces entités.

Un utilisateur d'un terminal mobile UE souscrit au préalable auprès d'un opérateur de télécommunication un abonnement à un ou plusieurs services.

Ainsi, chaque utilisateur a un profil d'utilisation, avec des crédits associé aux services auxquels il a souscrit (en anglais, « *Online charging* »), stocké dans une base de données temps réel de décompte de crédit mémorisée dans le serveur de gestion de crédits OCS. Ce profil d'utilisation de crédits est utilisé pour identifier si l'utilisateur a un compte disponible, s'il peut utiliser le réseau auprès duquel il a souscrit un abonnement et quel type de service sur le réseau il peut utiliser en fonction de ses crédits déjà utilisés et des crédits restants.

Le profil d'utilisation de crédits est mis à jour dans le serveur de gestion de crédits OCS à chaque utilisation d'un service, par exemple périodiquement, à la fin d'une session de service, ou lorsque les crédits sont épuisés.

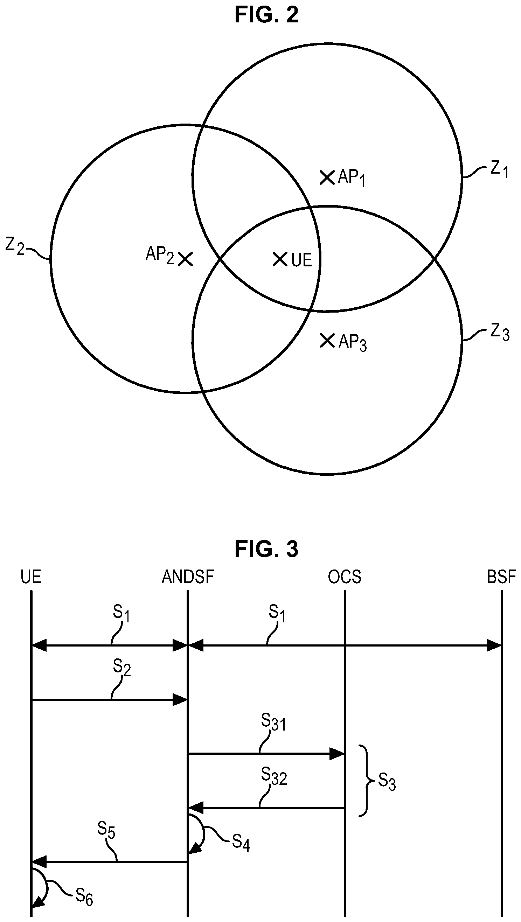

On se réfère maintenant à la **figure 2** qui illustre un terminal mobile UE localisé dans la zone de couverture Z1, Z2, Z3 de trois points d'accès AP1, AP2, AP3 d'un réseau de communication.

On considère que le terminal mobile UE est connecté au point d'accès AP1 et qu'il est en train d'accéder à un certain type de service.

On précise ici que l'on entend par « connecté à un point d'accès », le fait que le terminal mobile UE a une session ouverte avec le point d'accès pour recevoir un service.

On précise aussi que l'on entend par « couvert par un point d'accès », le fait que le terminal mobile UE est localisé dans une zone de couverture d'un point d'accès APi.

Si le terminal mobile UE est mobile dans le réseau, il peut vouloir décider d'effectuer une mobilité du point d'accès AP1 vers un autre point d'accès AP2, AP3, lequel peut être sélectionné au moyen du procédé de gestion de mobilité décrit ci-après.

En relation avec la **figure 3**, on décrit un procédé de gestion de la mobilité d'un terminal mobile UE selon un mode de réalisation de la présente invention.

Avant d'effectuer la mobilité entre points d'accès, le terminal mobile UE détecte (étape non détaillée) la nécessité d'initier la procédure de mobilité en se basant sur un évènement déclencheur, par exemple un évènement tel que la dégradation du canal de transmission du service.

Lorsqu'il est décidé d'initier une mobilité, le terminal peut tout d'abord auprès du serveur ANDSF afin d'établir une session de communication avec ce dernier.

Pour ce faire, dans une étape S1, le terminal UE s'authentifie auprès du serveur ANDSF, par exemple en utilisant la procédure décrite dans la spécification technique TS 33.402 (procédure « *UE-ANDSF communication security* ») qui permet au serveur ANDSF de récupérer les informations de sécurité entre le terminal UE et le serveur ANDSF auprès du serveur de fonction d'amorçage BSF, ainsi que les règles permettant de définir les accès qui pourront être utilisés par le terminal UE en fonction de son profil de souscription et de ses préférences.

Suite à l'authentification S1, le terminal UE envoie (étape S2) au serveur ANDSF une requête en récupération d'une liste de points d'accès , auprès desquels il peut se connecter pour accéder à un service. Cette requête contient typiquement un identifiant du terminal mobile UE.

Le serveur ANDSF récupère alors (étape S3) auprès du serveur de gestion de crédits OCS le profil d'utilisation de crédits de l'utilisateur du terminal mobile UE, ce profil étant associé au terminal mobile UE.

Cette récupération est réalisée en envoyant (étape S31), en fonction des informations récupérées lors de l'authentification, une requête au serveur OCS pour vérifier le profil d'utilisation de crédits de l'utilisateur du terminal mobile UE, cette requête comprenant un identifiant du terminal mobile UE ou de son utilisateur. Cette requête peut notamment être une requête « *Diameter*/*Radius* » du type « *Débit Unit Request* » telle qu'indiquée dans la spécification technique TS 32.299.

Suite à la réception de cette requête, le serveur OCS retrouve le profil d'utilisation associé au terminal mobile UE, ou à son utilisateur, grâce à l'identifiant transmis dans la requête et envoie (étape S32), en réponse, au serveur ANDSF un message contenant le profil d'utilisation de crédits de l'utilisateur et notamment des informations relatives à la consommation du service. Ce message peut être sous la forme d'un message de réponse avec le protocole « *Diameter* » *ou* « *Radius* » du type « *Debit Unit Response* » telle que décrit dans la spécification technique TS 32.299.

Dans un premier mode de réalisation, le profil d'utilisation de crédits peut ainsi être récupéré sur requête du serveur ANDSF, et ce de manière répétée dans le temps.

Dans un autre mode de réalisation avantageux, la requête envoyée au serveur OCS est une requête en souscription de mise à jour des crédits, indiquant au serveur OCS de transmettre le profil d'utilisation de crédits à chaque mise à jour de ce profil d'utilisation de crédits (par exemple par l'envoi d'une requête de type « CC-Request -type (= EVEN-Req) » à laquelle le serveur OCS répond par un message de type « CC-Requested -action subscriber ID = CHECK-BAL »).

Dans ce dernier cas, à chaque modification significative de ce profil d'utilisation de crédits (par exemple lorsqu'un crédit de l'utilisateur est épuisé par rapport à un certain type de réseau d'accès ou au contraire lorsqu'un crédit est rechargé pour un certain type de réseau d'accès), le serveur de gestion de crédits OCS transmet au serveur de découverte de points d'accès ANDSF un message de mise à jour de crédits contenant le profil d'utilisation de crédits, afni que ce serveur ANDSF soit informé en permanence de l'état des crédits de l'utilisateur.

Ce message peut prendre la forme « CAA (Result - Balance = ENOUGH-CREDIT, NO CREDIT) ».

En particulier, il est possible de ne transmettre un tel message de mise à jour de crédits que lorsqu'un des crédits de l'utilisateur est épuisé ou, au contraire, lorsqu'un crédit épuisé est rechargé, de façon à n'informer le serveur ANDSF que des modifications de crédits impactant la possibilité (ou non) d'utiliser un réseau d'accès.

Dans un autre mode de réalisation, ce message de mise à jour de crédits peut n'être transmis que lorsqu'un des crédits de l'utilisateur passe en dessous d'un seuil pour lequel il est préférable de changer de réseau d'accès.

En fonction de ces informations, ainsi qu'éventuellement des réseaux d'accès que le serveur ANDSF a identifié en fonction de la localisation de l'utilisateur, le serveur ANDSF établit (étape S4) une liste de points d'accès en fonction du profil d'utilisation de crédits qu'il a reçu du serveur OCS.

Cette liste est avantageusement une liste ordonnée, établie, à partir d'un ensemble de points d'accès possibles du réseau de communication, en rangeant ces points d'accès (éventuellement regroupés par type de point d'accès) en fonction de ce profil d'utilisation de crédits. Dans ce cas, les points d'accès apparaissant en premier dans cette liste ordonnée sont prioritaires par rapport aux suivants, le terminal mobile cherchant d'abord à s'attacher au premier point d'accès de la liste, puis au deuxième point d'accès en cas d'échec d'attachement au premier point d'accès, et ainsi de suite. Alternativement, la liste générée par le serveur ANDSF peut ne contenir que certains des points d'accès sélectionnés en fonction de ce profil d'utilisation de crédits.

Ainsi, à titre d'exemple, lorsque le crédit de consommation de données 3G de l'utilisateur est expiré, le serveur ANDSF peut décider de générer une liste ordonnée de points d'accès dans laquelle les points d'accès WiFi sont priorisés par rapport aux points d'accès « NodeB », afin que l'utilisateur puisse continuer à utiliser son service par le biais d'un réseau d'accès non 3GPP sur lequel il a encore des crédits. Par la suite, lorsque l'utilisateur recharge son crédit de consommation de données 3G, le serveur ANDSF peut modifier la liste ordonnée pour changer la priorité accordée aux points d'accès 3G, à nouveau disponibles.

Alternativement, toujours lorsque le crédit de consommation de données 3G de l'utilisateur est expiré, le serveur ANDSF peut décider de générer une liste de points d'accès ne contenant plus de stations 3G « NodeB », mais uniquement des points d'accès non 3GPP « WiFi », afin d'obliger l'utilisateur à utiliser un réseau d'accès non 3GPP sur lequel il a encore des crédits pour continuer à accéder à ce service. Par la suite, lorsque l'utilisateur recharge son crédit de consommation de données 3G, le serveur ANDSF peut modifier la liste pour y réintroduire les points d'accès 3G, à nouveau disponibles.

Une fois établie par le serveur ANDSF, cette liste est alors transmise (étape S5) au terminal mobile UE qui peut prendre une décision de mobilité à partir des informations reçue de l'ANDSF et initie (étape S6), si nécessaire, une mobilité, en sélectionnant un nouveau point d'accès au sein de cette liste. Cette mobilité est ensuite gérée par le terminal en suivant les recommandations 3GPP ou non 3GPP.

Par exemple, si suite à la transmission de la requête du terminal UE au serveur ANDSF, le terminal est en train d'accéder à un service sur un réseau 3GPP et que d'après son profil d'utilisation de crédits issu du serveur OCS, son crédit d'utilisation de ce service sur le réseau d'accès 3GPP est faible alors que ce n'est pas le cas sur un réseau d'accès non 3GPP, le serveur ANDSF peut prioriser le réseau d'accès non 3GPP plutôt que le réseau 3GPP, en renvoyant une liste de points d'accès dans laquelle les points d'accès non 3GPP sont priorisés par rapport aux points d'accès 3GPP, voire une liste ne contenant que des points d'accès non 3GPP comme indiqué précédemment.

En conséquence, le serveur ANDSF envoie au terminal UE la liste des points d'accès priorisés en fonction du profil d'utilisation de crédits, ce qui permet au terminal UE d'initier la mobilité entre les deux réseaux d'accès en tenant compte des crédits de l'utilisateur. De cette façon, en fonction du profil d'utilisation de crédits, le terminal UE bascule du réseau d'accès 3GPP au réseau d'accès non 3GPP (ou inversement selon les cas de figures), ce qui lui permet d'économiser son crédit de consommation sur le réseau d'accès 3GPP, ou bien encore de continuer son service qu'il n'aurait pas pu continuer sur le réseau 3GPP par manque de crédit.

L'invention n'est pas limitée au procédé décrit ci-dessus mais concerne également un système de gestion de mobilité d'un terminal mobile comprenant un serveur de gestion de crédits OCS comprenant une base de données dans laquelle est stockée le profil d'utilisation de crédits de l'utilisateur d'un terminal mobile UE et serveur de découverte de points d'accès ANDSF apte à transmettre à un terminal mobile UE une liste de points d'accès auxquels le terminal mobile peut se connecter, parmi un ensemble de points d'accès d'un réseau de communication.

Le serveur de gestion de crédits est configuré pour transmettre (étape S32) à un serveur de découverte de points d'accès ANDSF ledit profil d'utilisation de crédits suite à la réception (étape S31) d'une requête émise par ledit serveur de découverte de points d'accès ANDSF.

Le serveur de découverte de points d'accès ANDSF est configuré pour récupérer (étape S3), auprès d'un serveur de gestion de crédits OCS, un profil d'utilisation de crédits associé au terminal mobile UE et pour générer (étape S4) la liste de points d'accès sélectionnés en fonction dudit profil d'utilisation de crédits.

Pour sa part, le terminal mobile UE comprend un module de sélection de point d'accès configuré pour sélectionner un (ou plusieurs) point d'accès dans la liste de points d'accès reçue du serveur de découverte de points d'accès ANDSF lorsque cette liste de points d'accès a été générée en fonction d'un profil d'utilisation de crédits récupéré par ce serveur ANDSF auprès du serveur de gestion de crédits OCS. Ce module de sélection peut prendre la forme d'un programme d'ordinateur exécuté par le processeur du terminal mobile UE.

En outre, l'invention concerne également un produit programme d'ordinateur comprenant des instructions de code pour l'exécution du procédé ci-dessus décrit, lorsque celui-ci est exécuté par un processeur.

## Revendications

1. Procédé de gestion de la mobilité d'un terminal mobile (UE) dans un réseau de communication comprenant une pluralité de points d'accès (APi) et un serveur de découverte de points d'accès (ANDSF) adapté pour fournir au terminal mobile (UE) une liste de points d'accès du réseau auxquels le terminal mobile peut se connecter, le procédé comprenant les étapes suivantes, mises en oeuvre par le serveur de découverte de points d'accès (ANDSF) :
récupération (S3), auprès d'un serveur de gestion de crédits (OCS), d'un profil d'utilisation de crédits associé au terminal mobile (UE) ;
génération (S4) de la liste de points d'accès en fonction dudit profil d'utilisation de crédits.

2. Procédé de gestion selon la revendication 1, dans lequel la récupération du profil d'utilisation de crédits comprend l'envoi (S31) d'une requête auprès du serveur de gestion de crédits (OCS) et la réception (S32) d'au moins un message comprenant le profil d'utilisation de crédits, émis par le serveur de gestion de crédits suite à la réception de ladite requête.

3. Procédé de gestion selon la revendication 2, dans lequel la requête est une requête en souscription de mise à jour des crédits et le message comprenant le profil d'utilisation de crédits est émis (S32) par le serveur de gestion de crédits (OCS) suite à une modification du profil d'utilisation de crédits associé au terminal mobile (UE).

4. Procédé de gestion selon la revendication 3, dans lequel la modification du profil d'utilisation de crédits comprend l'épuisement d'au moins un crédit alloué à l'utilisateur du terminal mobile (UE) dans le profil d'utilisation de crédits ou le rechargement d'au moins un crédit épuisé alloué à l'utilisateur du terminal mobile (UE) dans le profil d'utilisation de crédits.

5. Procédé de gestion selon l'une des revendications 1 à 4, comprenant en outre l'envoi (S5) de la liste de points d'accès au terminal mobile (UE), ledit terminal mobile (UE) sélectionnant (S6) un nouveau point d'accès auquel s'attacher en situation de mobilité au moyen de ladite liste.

6. Procédé de gestion selon l'une des revendications précédentes, dans lequel le terminal mobile (UE) est attaché initialement à un réseau d'accès 3GPP et où la liste comprend des points d'accès appartenant à un réseau non 3GPP.

7. Serveur de découverte de points d'accès (ANDSF) apte à transmettre à un terminal mobile (UE) une liste de points d'accès auxquels le terminal mobile peut se connecter, parmi une pluralité de points d'accès d'un réseau de communication, le serveur de découverte de points d'accès (ANDSF) étant configuré pour :
récupérer (S3), auprès d'un serveur de gestion de crédits (OCS), un profil d'utilisation de crédits associé au terminal mobile (UE) ; et
générer (S4) la liste de points d'accès en fonction dudit profil d'utilisation de crédits.

8. Serveur de gestion de crédits (OCS) comprenant une base de données dans laquelle est stockée le profil d'utilisation de crédits de l'utilisateur d'un terminal mobile (UE), le serveur de gestion de crédits étant configuré pour transmettre (S32) à un serveur de découverte de points d'accès (ANDSF) ledit profil d'utilisation de crédits suite à la réception (S31) d'une requête émise par ledit serveur de découverte de points d'accès (ANDSF).

9. Serveur de gestion de crédits (OCS) selon la revendication 8, dans lequel la requête émise par le serveur de découverte de points d'accès (ANDSF) est une requête en souscription de mise à jour des crédits, le serveur étant configuré pour transmettre le profil d'utilisation de crédits au serveur de découverte de points d'accès suite à une mise à jour du profil d'utilisation de crédits.

10. Terminal mobile comprenant un module de sélection d'un point d'accès d'un réseau de communication, ledit module de sélection étant configuré pour sélectionner ledit point d'accès dans une liste de points d'accès reçue d'un serveur de découverte de points d'accès (ANDSF) dudit réseau de communication, ladite liste de points d'accès étant générée en fonction d'un profil d'utilisation de crédits récupéré par ledit serveur de découverte de points d'accès (ANDSF) auprès d'un serveur de gestion de crédits (OCS).

11. Système de gestion de mobilité d'un terminal mobile comprenant un serveur de gestion de crédits (OCS) selon la revendication 8 et un serveur de découverte de points d'accès (ANDSF) selon la revendication 7.

12. Produit programme d'ordinateur comprenant des instructions de code pour l'exécution d'un procédé selon l'une des revendications 1 à 6, lorsque celui-ci est exécuté par un processeur.

## Patentansprüche

1. Mobilitätsmanagementverfahren für ein mobiles Gerät (UE) in einem Kommunikationsnetz, das eine Vielzahl von Zugangspunkten (APi) und einen Zugangspunkt-Erkennungsserver (ADNSF) umfasst, der geeignet ist, dem mobilen Gerät (UE) eine Liste von Zugangspunkten des Netzes bereitzustellen, mit denen sich das mobile Gerät verbinden kann, wobei das Verfahren die folgenden, vom Zugangspunkt-Erkennungsserver (ANDSF) durchgeführten Schritte umfasst:
- Abrufen (S3) eines dem mobilen Gerät (UE) zugeordneten Guthabennutzungsprofils bei einem Guthabenmanagementserver (OCS);
- Erzeugen (S4) der Liste von Zugangspunkten in Abhängigkeit von dem Guthabennutzungsprofil.

2. Managementverfahren nach Anspruch 1, wobei das Abrufen des Guthabennutzungsprofils das Senden (S31) einer Anfrage an den Guthabenmanagementserver (OCS) und das Empfangen (S32) mindestens einer Nachricht, die das vom Guthabenverwaltungsserver nach dem Empfangen der Anfrage gesendete Guthabennutzungsprofil enthält, umfasst.

3. Managementverfahren nach Anspruch 2, wobei die Anfrage eine Anfrage zur Abonnierung der Aktualisierung der Guthaben ist und die das Guthabennutzungsprofil enthaltende Nachricht vom Guthabenmanagementserver (OCS) nach einer Änderung des dem mobilen Gerät (UE) zugeordneten Guthabennutzungsprofils gesendet wird (S32) .

4. Managementverfahren nach Anspruch 3, wobei die Änderung des Guthabennutzungsprofils das Verbrauchtsein mindestens eines dem Nutzer des mobilen Geräts (UE) im Guthabennutzungsprofil zugewiesenen Guthabens oder das Wiederaufladen mindestens eines dem Nutzer des mobilen Geräts (UE) im Guthabennutzungsprofil zugewiesenen verbrauchten Guthabens umfasst.

5. Managementverfahren nach einem der Ansprüche 1 bis 4, umfassend ferner das Senden (S5) der Liste von Zugangspunkten an das mobile Gerät (UE), wobei das mobile Gerät (UE) einen neuen Zugangspunkt, an den es sich in einer Mobilitätssituation anbindet, mittels der Liste auswählt (S6).

6. Managementverfahren nach einem der vorhergehenden Ansprüche, wobei das mobile Gerät (UE) anfänglich an ein 3GPP-Zugangsnetz angebunden ist und wobei die Liste zu einem Nicht-3GPP-Netz gehörende Zugangspunkte umfasst.

7. Zugangspunkt-Erkennungsserver (ANDSF), der geeignet ist, an ein mobiles Gerät (UE) eine Liste von Zugangspunkten, mit denen sich das mobile Gerät verbinden kann, aus einer Vielzahl von Zugangspunkten eines Kommunikationsnetzes zu übertragen, wobei der Zugangspunkt-Erkennungsserver (ANDSF) konfiguriert ist zum:
- Abrufen (S3) eines dem mobilen Gerät (UE) zugeordneten Guthabennutzungsprofils bei einem Guthabenmanagementserver (OCS); und
- Erzeugen (S4) der Liste von Zugangspunkten in Abhängigkeit von dem Guthabennutzungsprofil.

8. Guthabenmanagementserver (OCS), umfassend eine Datenbank, in der das Guthabennutzungsprofil des Nutzers eines mobilen Geräts (UE) gespeichert ist, wobei der Guthabenmanagementserver dazu konfiguriert ist, an einen Zugangspunkt-Erkennungsserver (ANDSF) das Guthabennutzungsprofil nach dem Empfangen (S31) einer von dem Zugangspunkt-Erkennungsserver (ANDSF) gesendeten Anfrage zu übertragen (S32).

9. Guthabenmanagementserver (OCS) nach Anspruch 8, wobei die vom Zugangspunkt-Erkennungsserver (ANDSF) gesendete Anfrage eine Anfrage zur Abonnierung der Aktualisierung der Guthaben ist, wobei der Server dazu konfiguriert ist, das Guthabennutzungsprofil nach einer Aktualisierung des Guthabennutzungsprofils an den Zugangspunkt-Erkennungsserver zu übertragen.

10. Mobiles Gerät, umfassend ein Modul zum Auswählen eines Zugangspunkts eines Kommunikationsnetzes, wobei das Auswahlmodul dazu konfiguriert ist, den Zugangspunkt aus einer Liste von Zugangspunkten auszuwählen, die von einem Zugangspunkt-Erkennungsserver (ANDSF) des Kommunikationsnetzes empfangen wurde, wobei die Liste von Zugangspunkten in Abhängigkeit von einem Guthabennutzungsprofil erzeugt wird, das von dem Zugangspunkt-Erkennungsserver (ANDSF) bei einem Guthabenmanagementserver (OCS) abgerufen wird.

11. Mobilitätsmanagementsystem für ein mobiles Gerät, umfassend einen Guthabenmanagementserver (OCS) nach Anspruch 8 und einen Zugangspunkt-Erkennungsserver (ANDSF) nach Anspruch 7.

12. Computerprogrammprodukt mit Codeanweisungen zum Ausführen eines Verfahrens nach einem der Ansprüche 1 bis 6, wenn es von einem Prozessor ausgeführt wird.

## Claims

1. Method for managing the mobility of a mobile terminal (UE) in a communication network comprising a plurality of access points (APi) and an access point discovery server (ANDSF) designed to provide the mobile terminal (UE) with a list of network access points to which the mobile terminal is able to connect, the method comprising the following steps, implemented by the access point discovery server (ANDSF):
retrieval (S3), from a credit management server (OCS), of a credit usage profile associated with the mobile terminal (UE);
generation (S4) of the list of access points depending on said credit usage profile.

2. Management method according to Claim 1, wherein the retrieval of the credit usage profile comprises sending (S31) a request to the credit management server (OCS) and receiving (S32) at least one message comprising the credit usage profile, sent by the credit management server following the reception of said request.

3. Management method according to Claim 2, wherein the request is a request to subscribe to credit updates, and the message comprising the credit usage profile is sent (S32) by the credit management server (OCS) following a modification of the credit usage profile associated with the mobile terminal (UE).

4. Management method according to Claim 3, wherein the modification of the credit usage profile comprises the depletion of at least one credit allocated to the user of the mobile terminal (UE) in the credit usage profile or the topping up of at least one depleted credit allocated to the user of the mobile terminal (UE) in the credit usage profile.

5. Management method according to one of Claims 1 to 4, further comprising sending (S5) the list of access points to the mobile terminal (UE), said mobile terminal (UE) selecting (S6) a new access point with which to associate in a mobility situation by way of said list.

6. Management method according to one of the preceding claims, wherein the mobile terminal (UE) is associated initially with a 3GPP access network and in which the list comprises access points belonging to a non-3GPP network.

7. Access point discovery server (ANDSF) able to transmit, to a mobile terminal (UE), a list of access points to which the mobile terminal is able to connect, from a plurality of access points of a communication network, the access point discovery server (ANDSF) being configured to:
retrieve (S3), from a credit management server (OCS), a credit usage profile associated with the mobile terminal (UE); and
generate (S4) the list of access points depending on said credit usage profile.

8. Credit management server (OCS) comprising a database in which the credit usage profile of the user of a mobile terminal (UE) is stored, the credit management server being configured to transmit (S32), to an access point discovery server (ANDSF), said credit usage profile following the reception (S31) of a request sent by said access point discovery server (ANDSF).

9. Credit management server (OCS) according to Claim 8, wherein the request sent by the access point discovery server (ANDSF) is a request to subscribe to credit updates, the server being configured to transmit the credit usage profile to the access point discovery server following an update of the credit usage profile.

10. Mobile terminal comprising a module for selecting an access point of a communication network, said selection module being configured to select said access point from a list of access points received from an access point discovery server (ANDSF) of said communication network, said list of access points being generated depending on a credit usage profile retrieved by said access point discovery server (ANDSF) from a credit management server (OCS).

11. System for managing the mobility of a mobile terminal, comprising a credit management server (OCS) according to Claim 8 and an access point discovery server (ANDSF) according to Claim 7.

12. Computer program product comprising code instructions for executing a method according to one of Claims 1 to 6 when said computer program product is executed by a processor.
